# DEMANDE DE BREVET EUROPEEN

(11) **EP 2 922 162 A1**
(43) Date de publication de la demande: **23.09.2015**
(21) Numéro de dépôt: 14290073.7
(22) Date de dépôt: 20.03.2014
(51) Int. Cl.: H02G 5/06

(54) **Arrangement de poste électrique sous enveloppe métallique**

(71) Demandeur: Siemens Aktiengesellschaft, 80333 München (DE)
(72) Inventeur: Verger, Sylvian, F-38320 Herbeys (FR)
(74) Mandataire: Maier, Daniel Oliver

(57) **Abrégé**

La présente invention décrit un arrangement de poste électrique sous enveloppe métallique comprenant deux compartiments (1, 2) tubulaires couplés en section par un isolateur (3) électrique de forme conique ayant une section de base (4b) et une section de sommet (4s), le dit isolateur étant solidarisé aux enveloppes (5, 6) des compartiments à sa section de base et à deux conducteurs (7, 8) de chacun des compartiments à sa section de sommet,
caractérisé en ce que
une périphérie d'au moins une des sections de base et de sommet comprend une forme géométrique présentant un ventre (vl, v2) par rapport à une direction axiale (ax1, ax2) des compartiments.

## Description

La présente invention concerne un arrangement de poste électrique sous enveloppe métallique selon le préambule de la revendication 1.

Particulièrement, l'invention concerne des arrangements de poste électrique - haute tension - sous enveloppe métallique dit de type « GIS » (Gas Insulated Substation) comprenant au moins un isolateur reliant une enveloppe externe métallique principalement tubulaire à un ou des éléments conducteurs internes à ladite enveloppe.

Ces isolateurs peuvent avoir des géométries différentes. Par exemple EP 1511146 A2 présente un arrangement de poste électrique sous enveloppe métallique comprenant deux compartiments tubulaires externes couplés en section par un isolateur électrique de forme en disque épais, le dit isolateur étant solidarisé à l'enveloppe formée par les compartiments à sa circonférence et à deux conducteurs de chacun des compartiments en son centre. L'isolateur comprend une électrode de contrôle interne en forme de champignon afin de minimiser des dimensions de l'enveloppe, mais aussi de limiter des accumulations de charge sur l'isolateur. Egalement, des électrodes sont disposées de part et d'autre de la circonférence de l'isolateur et possèdent des contours plats et arrondis qui en vis-à-vis permettent un contrôle optimal du champ électrique. Spécifiquement pour des associations centre/externe de contours « plats » et « ventrus », il est dit qu'un écartement entre des lignes équipotentielles électriques peut ainsi être maintenu aussi important que possible afin de minimiser un risque de charges partielles.

Une autre forme d'isolateur a été optimisée et décrite dans une publication « Electrostatic-field optimization of the profile of epoxy spacers for compressed Sf6-insulated cables », IEEE Transactions on Power Apparatus and Systems, Vol. PAS-99, 6 Nov. 1980. En effet, il est montré que la forme d'isolateur de géométrie à disque peut être améliorée sous une forme conique afin d'améliorer des performances diélectrique d'un câble assimilable à un arrangement de poste électrique sous enveloppe métallique comprenant un gaZ diélectrique SF6.

C'est sur cette base de géométrie d'isolateur conique que l'invention souhaite porter une solution novatrice, car cette géométrie présente en particulier pour un mode de fonctionnement du poste électrique en DC (direct current) des fortes accumulations de charges en surface de l'isolateur. Ainsi, même si la géométrie conique est optimale sous un mode de fonctionnement du poste électrique en AC (alternative current), elle l'est moins en mode DC si cela est requis dans un arrangement de type GIS. C'est pourquoi les arrangements fonctionnant sous des modes DC et AC doivent être conçus de manière différentes pour remédier au trouble du mode DC, c'est-à-dire en surdimensionnant radialement l'arrangement sous mode DC, ce qui le rend fort coûteux.

Afin de limiter ces effets d'accumulation de charges sur la surface de l'isolateur de forme conique, des études ont été engagées depuis les années 2000, présentant des solutions de revêtements spécifiques de l'isolateur afin de limiter ces effets. Une publication « Surface Charge Accumulation on HVDC-GIS-Spacer », F. Messerer et al., TU Munich, 2000 décrit une telle approche.

Un but de la présente invention est de proposer un arrangement de poste électrique sous enveloppe métallique comprenant un isolateur de forme conique présentant des effets minimaux d'accumulation de charges en surface de l'isolateur, particulièrement pour rendre les modes de fonctionnement DC ou AC utilisables par un arrangement universel, de sorte à ne pas devoir modifier (surdimensionner radialement) l'arrangement lors d'un changement d'un mode à l'autre.

Principalement, pour un isolateur de forme conique comme décrit précédemment, les lignes équipotentielles (liées au champ électrique) entre l'enveloppe et la partie conductrice centrale intersectent non orthogonalement la surface oblique de la forme conique et génèrent ainsi une composante de champ dit normal à la dite surface. Cette composante de champ électrique est la source majeure de l'accumulation de charge, en particulier en mode DC. L'invention se propose donc de minimiser voire éliminer cette composante normale.

A partir d'un arrangement de poste électrique sous enveloppe métallique comprenant deux compartiments ou parties/portions tubulaires couplés en section par un isolateur électrique de forme conique ayant une section de base et une section de sommet, le dit isolateur étant solidarisé aux enveloppes des compartiments à sa section de base et à deux conducteurs de chacun des compartiments à sa section de sommet, l'invention prévoit qu'une périphérie directe telle qu'une base accolée d'au moins une des sections de base et de sommet comprend une forme géométrique présentant un ventre par rapport à une direction axiale des compartiments. Ce ventre directement attenant à la section de base permet ainsi une déviation des lignes équipotentielles de manière à les réorienter localement et perpendiculairement à la surface de la forme conique de l'isolateur. Le champ normal est ainsi réduit voire éliminé et avantageusement l'accumulation de charges est ainsi fort minimisée. Du même fait, sachant que ce ventre peut être matérialisé par un profil ou un élément ajouté dans au moins un des compartiments, l'arrangement peut ainsi être identique pour des modes de fonctionnement AC et DC.

Un ensemble de sous-revendications présente également des avantages de l'invention.

Des exemples de réalisation et d'application sont fournis à l'aide de figures décrites :
- Figure 1: Exemple d'arrangement de poste électrique sous enveloppe métallique selon l'état de l'art,
- Figure 2: Exemple d'arrangement de poste électrique sous enveloppe métallique selon l'invention.

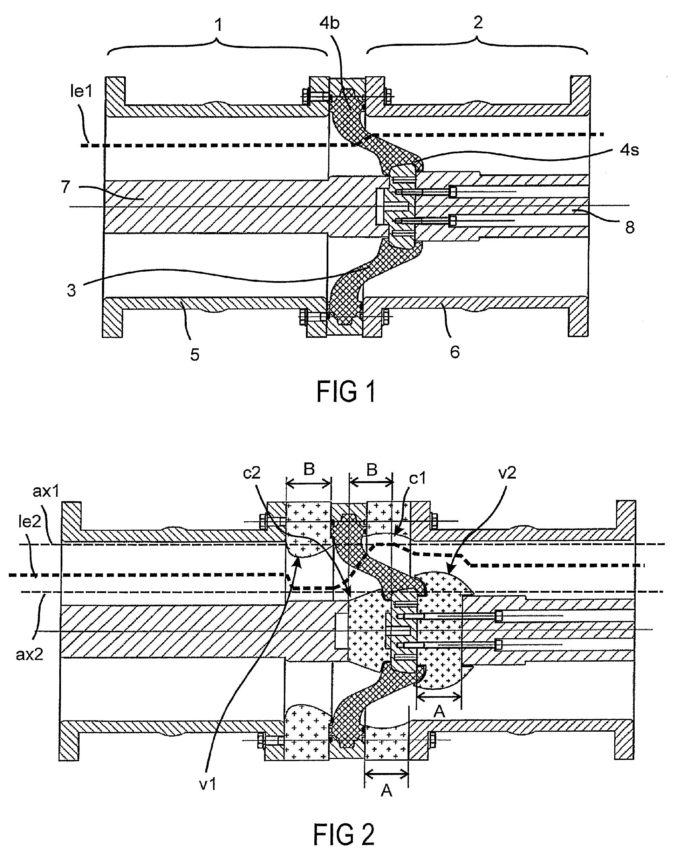

Figure 1 présente un exemple d'arrangement de poste électrique sous enveloppe métallique selon l'état de l'art, comprenant deux compartiments ou parties/portions (1, 2) tubulaires couplés en section par un isolateur (3) électrique de forme conique ayant une section de base (4b) et une section de sommet (4s), le dit isolateur étant solidarisé aux enveloppes (5, 6) des compartiments à sa section de base et à deux conducteurs (7, 8) de chacun des compartiments à sa section de sommet. Une ligne équipotentielle (le1) entre l'enveloppe (5, 6) et la partie conductrice centrale (7, 8) intersecte non orthogonalement la surface oblique de la forme conique et génère ainsi une composante de champ dit normal à la dite surface, provoquant l'accumulation de charges à minimiser.

Figure 2 présente un exemple d'arrangement de poste électrique sous enveloppe métallique selon l'invention et comprend principalement les mêmes caractéristiques que l'arrangement selon figure 1. Complémentairement, une périphérie directe telle qu'une base accolée d'au moins une des sections de base et de sommet comprend une forme géométrique présentant un ventre (v1) par rapport à une direction axiale (ax1) des compartiments, ici de l'enveloppe (5) telle qu'à la figure 1. La ligne équipotentielle (le1) de la figure 1 est ainsi localement déviée face au ventre (v1) sous une autre ligne équipotentielle (le2) représentée en figure 2. La déviation obtenue est telle que la ligne équipotentielle (le2) présente un angle d'incidence normal à la surface conique de l'isolateur, permettant ainsi de minimiser voire éliminer le champ normal en la dite surface.

L'arrangement selon figure 2 peut être encore amélioré au sens de l'invention en ce qu'une périphérie d'au moins une des sections de base et de sommet comprend une forme géométrique présentant le ventre (v1, v2) et un creux (c1, c2) par rapport à la direction axiale (ax1, ax2) des compartiments, les dits ventre et creux étant juxtaposés/accolés de part et d'autre de la section concernée selon la direction axiale. De ce fait, des déviations locales successives le long de la ligne équipotentielle (le2) peuvent être atteintes afin d'affiner l'orthogonalité de la ligne équipotentielle sur l'intégralité des faces surfacique de la forme conique de l'isolateur.

Avantageusement, les ventres et creux peuvent être idéalement formés par des éléments insérables par couplage entre les enveloppes des compartiments et la section de base de l'isolateur ou/et entre les conducteurs et la section de sommet de l'isolateur. La figure 2 montre un exemple de mode de réalisation fort simple prévoyant ainsi quatre éléments annulaires insérables tels que :
- Le ventre (v1) est un élément de largeur (B) insérable entre la section d'enveloppe (5) et la section de base (4b) de l'isolateur ;
- Le creux (c1) est un élément de largeur (A) insérable entre la section de base (4b) de l'isolateur et la section d'enveloppe (6);
- Le ventre (v2) est un élément de largeur (A) insérable entre la section de sommet (4s) de l'isolateur et une extrémité du conducteur (8);
- Le creux (c2) est un élément de largeur (B) insérable entre une extrémité du conducteur (7) et la section de base (4b) de l'isolateur.

Cet arrangement à deux ventres et deux creux se laisse donc installés fort simplement par insertion (et couplage) des éléments annulaires existants.

Alternativement, l'invention peut prévoir que les ventres et creux peuvent être formés par des éléments solidarisables à au moins la section de base de l'isolateur ou et à la section de sommet de l'isolateur.

Ainsi, selon ce mode, un autre exemple de mode de réalisation fort simple prévoirait ainsi quatre éléments annulaires solidarisables tels que :
- Le ventre (v1) est un élément de largeur (B) solidarisable entre la section d'enveloppe (5) et la section de base (4b) de l'isolateur ;
- Le creux (c1) est un élément de largeur (A) solidarisable entre la section de base (4b) de l'isolateur et la section d'enveloppe (6);
- Le ventre (v2) est un élément de largeur (A) solidarisable entre la section de sommet (4s) de l'isolateur et une extrémité du conducteur (8);
- Le creux (c2) est un élément de largeur (B) solidarisable entre une extrémité du conducteur (7) et la section de base (4b) de l'isolateur.

Egalement, les ventres et creux peuvent être formés par des éléments solidarisables à une surface interne d'enveloppe des compartiments tubulaires ou/et une surface externe des conducteurs des compartiments.

De tels éléments peuvent ainsi être des formes ou capot venant être disposés/accolés autour des sections de base et de sommet de la partie conique de l'isolateur. Selon ces modes de réalisation, l'arrangement n'est pas modifié en longueur, comme pour la précédente insertion d'éléments annulaires intercalés dans l'arrangement.

Dans tous les cas, l'arrangement selon l'invention comprend ainsi un poste électrique sous enveloppe métallique adapté à une mise sous haute tension au moyen de courants alternatifs AC ou continus/directs DC, sans devoir surdimensionner radialement l'arrangement.

## Revendications

1. Arrangement de poste électrique sous enveloppe métallique comprenant deux compartiments (1, 2) tubulaires couplés en section par un isolateur (3) électrique de forme conique ayant une section de base (4b) et une section de sommet (4s), le dit isolateur étant solidarisé aux enveloppes (5, 6) des compartiments à sa section de base et à deux conducteurs (7, 8) de chacun des compartiments à sa section de sommet,
**caractérisé en ce que**
une périphérie d'au moins une des sections de base et de sommet comprend une forme géométrique présentant un ventre (v1, v2) par rapport à une direction axiale (ax1, ax2) des compartiments.

2. Arrangement selon revendication 1, pour lequel une périphérie d'au moins une des sections de base et de sommet comprend une forme géométrique présentant le ventre (v1, v2) et un creux (c1, c2) par rapport à la direction axiale des compartiments, les dits ventre et creux étant juxtaposés de part et d'autre de la section concernée selon la direction axiale.

3. Arrangement selon revendication 2, pour lequel les ventres et creux sont formés par des éléments insérables par couplage entre les enveloppes des compartiments et la section de base de l'isolateur ou/et entre les conducteurs et la section de sommet de l'isolateur.

4. Arrangement selon revendication 2, pour lequel les ventres et creux sont formés par des éléments solidarisables à au moins la section de base de l'isolateur ou/et à la section de sommet de l'isolateur.

5. Arrangement selon revendication 3 ou 4, pour lequel les quatre éléments annulaires insérables ou solidarisables sont tels que :
- Le ventre (v1) est un élément de largeur (B) insérable ou solidarisable entre la section d'enveloppe (5) et la section de base (4b) de l'isolateur ;
- Le creux (c1) est un élément de largeur (A) insérable ou solidarisable entre la section de base (4b) de l'isolateur et la section d'enveloppe (6);
- Le ventre (v2) est un élément de largeur (A) insérable ou solidarisable entre la section de sommet (4s) de l'isolateur et une extrémité du conducteur (8);
- Le creux (c2) est un élément de largeur (B) insérable ou solidarisable entre une extrémité du conducteur (7) et la section de base (4b) de l'isolateur.

6. Arrangement selon revendication 2, pour lequel les ventres et creux sont formés par des éléments solidarisables à une surface interne d'enveloppe des compartiments tubulaires ou/et une surface externe des conducteurs des compartiments.

7. Arrangement selon revendication 1 ou 2, pour lequel le poste électrique sous enveloppe métallique est adapté à une mise sous haute tension au moyen de courants alternatifs ou continus.
